# EUROPÄISCHE PATENTANMELDUNG

(11) **EP 2 087 982 A1**
(43) Veröffentlichungstag der Anmeldung: **12.08.2009**
(21) Anmeldenummer: 09001284.0
(22) Anmeldetag: 30.01.2009
(51) Int. Cl.: B29C 37/00, B29C 67/24, B29C 41/08, B29C 41/22, B29C 45/14

(54) **Verfahren zur Herstellung von Polyurethanformteilen**

(30) Priorität: 09.02.2008 DE 102008008390
(71) Anmelder: Bayer MaterialScience AG, 51368 Leverkusen (DE); DECS-Kunststoff & Gerätetechnik GmbH, 99610 Sömmerda, Thüringen (DE)
(72) Erfinder: Mies, Detlef, 50189 Elsdorf (DE); Müller, Karsten, 51375 Leverkusen (DE); Krämer, Ulrich, 99610 Sömmerda (DE)

(57) **Zusammenfassung**

Die vorliegende Erfindung betrifft ein Verfahren zur Herstellung von komplex aufgebauten Polyurethanformkörpem mit optisch anspruchsvollen Oberflächen.

## Beschreibung

Die vorliegende Erfindung betrifft ein Verfahren zur Herstellung von komplex aufgebauten Polyurethanformkörpern mit optisch anspruchsvollen Oberflächen.

Derzeit werden Polyurethanformteile dadurch hergestellt, dass beispielsweise ein IMC-Lack (Inmold-Coating-Lack) in ein vorzugsweise poliertes Werkzeug eingebracht (eingespritzt wird). Nach einer gewissen Ablüftzeit des Lackes (Antrocknen des Lackes) wird das Polyurethan-Reaktionsgemisch bzw. ein Polyurethan-Glaserfasergemisch in das Werkzeug eingebracht. Das Werkzeug wird geschlossen, und nach entsprechender Aushärtungszeit wird das Bauteil entnommen. Nachteilig an diesen Verfahren sind die hohen Werkzeugkosten sowie die langen Zykluszeiten unter anderem wegen der aufwändigen Reinigung des Werkzeuges. Darüber hinaus ist die Werkzeugoberfläche sehr empfindlich, so dass bei einer Beschädigung hohe Reparaturkosten sowie ein Ausfall der Produktion auftreten. Kontinuierlicher Verschleiß verursachen ebenfalls hohe Instandsetzungskosten und kurzfristig aufeinander folgende Wartungsintervalle sowie entsprechend lange Ausfallzeiten.

Aufgrund der vorbeschriebenen Nachteile sind insbesondere mittlere bis große Serienzahlen oder großflächige Bauteile, insbesonder Bauteile mit komplexem, mehrschichtigem PUR-Aufbau sowie solche, die einen IMC-Lack aufweisen, wirtschaftlich kaum herstellbar.

Aufgabe der vorliegenden Erfindung war es daher, ein Verfahren zur Verfügung zu stellen, welches die vorgenannten Nachteile nicht aufweist.

Die Aufgabe konnte überraschenderweise dadurch gelöst werden, dass anstelle der bisher eingesetzten Werkzeuge ein Werkzeug mit einem herausnehmbaren Einsatz eingesetzt wird. Der Einsatz weist dieselben Konturen wie das Werkzeug auf und wird passgenau in besagtes Werkzeug eingelegt.

Gegenstand der Erfindung ist ein Verfahren zur Herstellung von Polyurethanformteilen, wobei
i) ein Werkzeug vorgelegt wird,
ii) eine Deckschicht, beispielsweise ein IMC-Lack oder ein IMC-Coat (Inmold Decoration) und/oder eine Folie A) in einen Einsatz, der passgenau in das Werkzeug passt, eingespritzt, eingesprüht, eingelegt oder eingebracht wird,
iii) gegebenenfalls eine Funktionsschicht B), bevorzugt bestehend aus einem Polyurethan-Reaktivgemisch auf die Deckschicht oder Folie A) aufgetragen, bevorzugt aufgesprüht wird,
iv) gegebenenfalls weitere PUR-Schichten C) auf die Funktionsschicht B) aufgebracht werden,
v) der Einsatz in das Werkzeug eingelegt wird,
vi) ein Polyurethan-Reaktivgemisch D) in den im Werkzeug befindlichen Einsatz eingebracht wird,
vii) das Polyurethan-Gemisch aushärtet,
viii) der Einsatz mit dem Polyurethanformteil aus dem Werkzeug entfernt wird.

Die Vorteile des erfindungsgemäßen Verfahrens bestehen unter anderem darin, dass Werkzeug-Einsätze, insbesondere polierte Werkzeug-Einsätze, verwendet werden. Zum einen sind Werkzeug-Einsätze preiswerter, so dass bei einer Beschädigung nicht das komplette teure Werkzeug repariert oder ausgetauscht werden muss; des weiteren wird die zeitliche Verfügbarkeit des Werkzeuges hierdurch deutlich erhöht.

Ebenfalls ist es möglich, mehrere Werkzeug-Einsätze parallel zu nutzen. DerAuftrag des IMC-Lackes oder auch das Einlegen der Folie sowie bei Bedarf das Einbringen diverser Polyurethan(PUR)-Lagen und Verstärkungsmaterialien können außerhalb des eigentlichen Werkzeuges erfolgen, so dass die Taktzeiten, in denen das komplette Formteil hergestellt wird, verkürzt werden können. Darüber hinaus kann der IMC-Lack-Auftrag sowie das Einbringen von PUR-Sprühschichten in einer Sprühkabine erfolgen, welches zusätzliche erhöhte Sauberkeit gewährleistet. Ebenfalls kann das Werkzeugoberteil mit entsprechenden Trennmitteln versehen werden, ohne das die Gefahr der Kontamination des Einsatzes besteht.

Ein weitere Vorteil ist, dass der Einsatz zum Zeitpunkt des Materialeintrages nicht die Werkzeugtemperatur aufweisen muss, wodurch die Verwendung reaktiver temperaturgestarteter PUR-Systeme möglich ist, welche nach Einbringung des Einsatzes in das heiße Werkzeug zügig ausreagieren, und somit die Zykluszeit weiter verkürzt wird. Gegebenenfalls können auch zweiseitig glasfaserverstärkte PUR-benetzte Sandwichelemente außerhalb des Werkzeuges in den Einsatz eingebracht werden.

Prinzipiell ist mit dem erfindungsgemäßen Verfahren die Fertigung komplexer Bauteile in kurzen Zykluszeiten möglich, da wesentliche Prozessschritte vom Werkzeug entkoppelt sind und parallel erfolgen können.

Das Einbringen des Einsatzes in das Werkzeug kann beispielsweise über ein Shuttle-System oder mittels eines PUR-Eintragsroboters in Verbindung mit einem entsprechenden Adaptier-System erfolgen.

Die PUR-Schichten C) können auch Verstärkungsmaterialien enthalten. Bevorzugt wird als Schicht C) ein beidseitig glasfaserverstärktes PUR-benetztes Sandwichelement mit einer Kernlage, wobei die Kernlage bevorzugt eine Papier-, Metall- oder Kunststoffwabe ist, eingesetzt.

Das PUR-Reaktivgemisch D) wird entweder in offener Füllweise oder mittels Injektion in das geschlossene Werkzeug (RIM-Verfahren) eingebracht.

Das Werkzeugoberteil kann, falls erforderlich, mit Trennmitteln versehen werden.

Nach Entfernen des Einsatzes mit dem fertigen PUR-Formteil, kann unmittelbar danach ein weiterer Einsatz, der bereits entsprechend den vorbeschriebenen Schritten ii) bis iv) vorbereitet ist, in das Werkzeug eingelegt werden.

Als Material für den Werkzeugeinsatz eignen sich alle Werkstoffe, welche die erforderliche Oberflächenqualität und Festigkeit aufweisen. Besonders geeignet sind Stahl oder entsprechende hochfeste Legierungen. Das gewählte Material sollte im Ausdehnungskoeffizienten dem des Werkzeuges angepasst sein. Das Material sollte eine gute Wärmeleitfähigkeit besitzen, um die Werkzeugtemperatur innerhalb einer kurzen Zeitspanne auf die eingebrachten Materialschichten übertragen bzw. um die Energie der Reaktionsexothermie schnell an das Werkzeug ableiten zu können. Die Materialstärke der Einsätze sollte zwischen 0,5 mm und 5 mm, bevorzugt zwischen 0,7 mm und 3 mm, besonders bevorzugt zwischen 1,5 mm und 2,0 mm betragen.

## Patentansprüche

1. Verfahren zur Herstellung von Polyurethanformteilen, wobei
i) ein Werkzeug vorgelegt wird,
ii) eine Deckschicht A) und/oder eine Folie A) in einen Einsatz, der passgenau in das Werkzeug passt, eingespritzt, eingesprüht, eingelegt oder eingebracht wird,
iii) gegebenenfalls eine Funktionsschicht B), bevorzugt bestehend aus einem Polyurethan-Reaktivgemisch auf die Deckschicht oder Folie A) aufgetragen, bevorzugt aufgesprüht wird,
iv) gegebenenfalls weitere PUR-Schichten C) auf die Funktionsschicht B) aufgebracht werden,
v) der Einsatz in das Werkzeug eingelegt wird,
vi) ein Polyurethan-Reaktivgemisch D) in den im Werkzeug befindlichen Einsatz eingebracht wird,
vii) das Polyurethan-Gemisch aushärtet,
viii) der Einsatz mit dem Polyurethanformteil aus dem Werkzeug entfernt wird.
